(19) Europäisches Patentamt

European Patent Office

Office européen des brevets

(11) **EP 1 401 208 A1**

(12) **EUROPEAN PATENT APPLICATION**

(43) Date of publication:
    **24.03.2004 Bulletin 2004/13**

(51) Int Cl.⁷: $H04N\ 7/26$

(21) Application number: **03019669.5**

(22) Date of filing: **08.09.2003**

(84) Designated Contracting States:
    **AT BE BG CH CY CZ DE DK EE ES FI FR GB GR
    HU IE IT LI LU MC NL PT RO SE SI SK TR**
    Designated Extension States:
    **AL LT LV MK**

(30) Priority: **17.09.2002 KR 2002056566**

(71) Applicant: **LG ELECTRONICS INC.
    Seoul (KR)**

(72) Inventor: **Roh, Kyu-Chan
    Daejeon (KR)**

(74) Representative: **von Hellfeld, Axel, Dr. Dipl.-Phys.
    Wuesthoff & Wuesthoff
    Patent- und Rechtsanwälte
    Schweigerstrasse 2
    81541 München (DE)**

(54) **Fine granularity scalability encoding/decoding apparatus and method**

(57)    A fine granularity scalability encoding/decoding apparatus and method are disclosed capable of improving a coding efficiency and reducing a bit rate of an entire coding stream by making an enhancement layer signal and a base layer signal have the same sign. The apparatus includes a first quantizer for performing a DCT on a motion-compensated image and quantizing a result value; a second quantizer for re-quantizing the value obtained by the first quantizer; an inverse-quantizer for re-quantizing a value re-quantized by the second quantizer; a first subtracter for obtaining a difference between a value of N times the re-quantized value and the inverse-quantized value; a second subtracter for obtaining a difference between the value quantized by the first quantizer and the value quantized by the inverse-quantizer; and a third subtracter for subtracting the output value of the first subtracter from the output value of the second subtracter.

FIG. 3

# EP 1 401 208 A1

**Description**

BACKGROUND OF THE INVENTION

1. Field of the Invention

The present invention relates to a fine granularity scalability encoding/decoding apparatus and method, and more particularly, to a fine granularity scalability encoding/decoding apparatus and method capable of improving a coding efficiency and reducing a bit rate of an entire coding stream by making an enhancement layer signal and a base layer signal have the same sign.

2. Description of the Background Art

In coding and transmitting an image, an MPEG-4 (Moving Pictures Expert Group-4) is designed to providing various picture qualities depending on a situation or a performance of a terminal of a receiver.

In a conventional art, if a computing power of a terminal of the receiving end is excellent and a delivery layer (wireless, ATM, LAN or the like) is in a good condition, a moving picture with a high picture quality can be received and displayed. If, however, the performance of the receiver is not good or a communication line is not in a good condition, such a high quality moving picture can not be received.

In order to cope with the two situations, the MPEG-4 is designed to perform a scalable image coding.

The scalable image coding is for an encoder, a sending end, to make a scalable bit stream and transmit it so that the receiving end can receive an image of various picture qualities (that is, from a low quality to a high quality).

If the transmission bit stream is scalable, there can be various types of receivers: a low performance receiver can receive a basic picture quality of image bit stream encoded at a base layer and display it, while a high performance receiver can receive a high picture quality of image bit stream encoded in an enhancement layer and display it.

The scalable image coding method is roughly divided into the base layer and the enhancement layer. When moving picture information of a base quality is transmitted from the base layer of the encoder and information providing an enhanced picture quality is transmitted together with the basic quality moving picture from the enhancement layer of the encoder to the receiving side, a decoder receives the corresponding information transmitted from the two layers and decodes high quality image information. At this time, the receiving side selectively decodes the received image information of the two layers according to a state of the performance of the terminal and the delivery layer.

That is, if the decoder is incapable of decoding every information transmitted through the delivery layer, it decodes only the information on the base layer, a minimum image quality compensation layer, and discards the information corresponding to the remaining enhancement layer.

However, the high quality receiver can receive information of every layer and implement a high quality image. Namely, through the scalable image coding method, an image satisfying both users of the high quality decoder and users of a low quality decoder can be transmitted.

In the above-mentioned scalable image coding method, only when the receiving end completely receives all the bit streams from the enhancement layer, it can restore a corresponding image frame. Otherwise, the corresponding image can not be properly restored. Thus, until all the bit streams are received after requesting its re-transmission, the image restoration can not be performed, or a transmission error concealment should be performed by using an image of a previous frame.

As stated above, if a planed image bit stream can not be not transmitted on a real time basis due to an unstable delivery layer, a received image should be restored on a real time basis by using only the partial image bit streams received until a certain time point. For this purpose, the MPEG-4 proposes an FGS (Fine Granular Scalability) coding method and formulates international standards.

The FGS coding method is to restore a transmission image by using partial bit streams received up to a certain time point if a delivery layer is not stable when a scalable coding is performed, complementing the shortcomings of the existing scalable coding method implemented in consideration of only a stable delivery layer.

The FGS coding method uses a method of transmitting image bit streams by the unit of bit plane when the enhancement layer of the sending end implements and transmits the image bit streams of an enhanced picture quality on the basis of an image transmitted from the base layer.

The FGS coding method is similar to the existing scalable coding method in the aspect that when the sending end transmits a bit stream required for the enhancement layer to the receiving end, it transmits only a difference between an original image and an image transmitted from the base layer, to better a picture quality of the transmitted image.

A major difference between the FGS encoding method and the existing scalable encoding method lies in that, in the FGS encoding method, the enhancement layer divides image information to be transmitted to the receiving end into bit planes, transmits the most significant bit (MSB) with priority, and then transmits the less important bits consecutively by dividing them into bit planes.

Accordingly, in the FGS encoding method, even though the receiving end fails to receive every bit required for restoration of an image due to a sudden change in a bandwidth of the delivery layer, it can restore a received image to some extent by using bit streams received up to a certain time point.

For example, assuming that image information of 25 is transmitted, 25 is expressed by '11001' by a binary numeric, consisting of 5 bit planes. In order to transmit the image information by bit planes, first the sending end informs the receiving end that the transmitted information consists of 5 bit planes.

Thereafter, in the case that the bits are transmitted from the MSB to the least significant bit (LSB), when transmission of the first bit is completed, the receiving end can recognize that the received information is a value of above 16 (10000), and when transmission of the second bit is completed, the receiving end can recognize that the received information is a value of above 24 (11000).

If the sending end can not transmit a bit stream any more due to a restriction of a bandwidth of the delivery layer, the receiving end can restore the numeric 24 by using the bit stream 11000 which has been received up to a certain time point. Resultantly, the received information 24 is similar to the information 25 that the sending end initially intended to transmit.

As mentioned above, the fine granularity scalability encoding method used in the MPEG-4 considers a situation that a bandwidth of the delivery layer can be quickly changed any time.

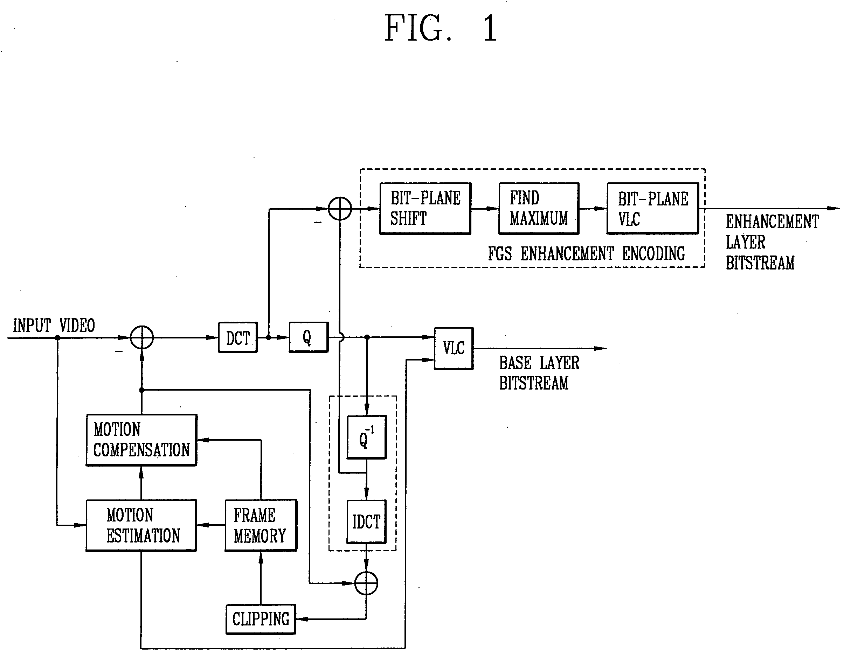

The construction of the basic fine granularity scalability coder will now be described with reference to Figure 1.

Figure 1 is a schematic block diagram of an MPEG-4 fine granularity scalability coder in accordance with a conventional art, which does not have a part for a DCT (Discrete Cosine Transform) calculation in the enhancement layer.

As shown in Figure 1, the conventional fine granularity scalability coder includes a fine granularity scalability (FGS) layer consisting of a base layer and an enhancement layer, and a signal of the enhancement layer is made by a difference value between a DCT coefficient before quantization and a signal re-constructed to be inverse-quantization.

First, for the base layer, the conventional MPEG-4 encoding method is used as it is.

In the image encoding method used for the base layer, an image data compression is performed in a spatial and temporal direction through a discrete cosine transform (DCT), quantization, motion estimation (ME), motion compensation (MC), inverse quantization ($Q^{-1}$), inverse discrete cosine transform (IDCT) or the like, and an entropy coding according to preponderation of coding generation probability is performed through a variable length coding (VLC). Finally, a base layer bit stream generated through the coding is transmitted to the delivery layer through a transmission buffer.

As illustrated, the FGS enhancement encoding of the enhancement layer, a difference between an original image and an image reproduced in the base layer is calculated by a subtracter, and a bit plane shifting process, a maximum value finding process, a bit plane VLC process are respectively performed on an error value according to the difference.

The difference is a difference between an image reproduced after being coded in the base layer, that is, an image reproduced through the inverse-quantizer ($Q^{-1}$), and the original image generated after DCT is performed.

At this time, if a block selectively having a good picture quality is required, the corresponding value should be transmitted first with priority, and in this case, the bit plane shifting process can be selectively performed. The process of transmitting the corresponding value with priority because of necessity of the block with a good picture quality performed in the bit plane shifting process is defined as a selective enhancement.

Thereafter, in the process of finding a maximum value, the number of maximum bit planes for transmitting a corresponding image frame is obtained.

And then, in the bit plane VLC process, 64 DCT coefficients (bit of a corresponding bit plane of the DCT coefficient is 0 or 1) obtained by the unit of block of the bit plane are put into one matrix in zigzag scan order, and each matrix is run-length coded according to a VLC table.

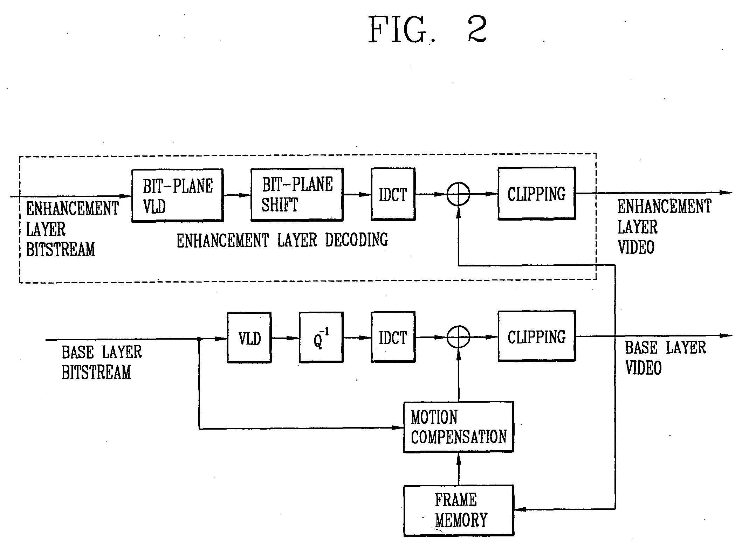

A decoder terminal (that is, the receiving end) of the FGS encoder used in the MPEG-4 international standards has such a structure as shown in Figure 2.

Figure 2 shows a decoder corresponding to the FGS encoder in accordance with the conventional art.

As illustrated, decoding of the transmission bit stream received from the delivery layer is performed separately in the base layer and in the enhancement layer in reverse order to that of the encoder.

In the base layer of the decoder, the MPEG-4 image decoding method is used as it is.

First, when a bit stream is inputted to the base layer, the bit stream undergoes a variable length decoding (VLD), inverse quantization, and inverse discrete cosine transforming. And then, the inverse discrete cosine transformed value and a motion-compensated value are added, and the obtained values are clipped into the range of 0 ~ 255, thereby restoring an original image of the base layer.

Meanwhile, in the enhancement layer of the FGS encoding method, decoding of a bit stream transmitted to the enhancement layer is performed in an inverse order to that of the encoder. That is, first, bit-plane VLD is performed on the inputted enhancement bit stream. At this time, if a block with a good picture quality has been selectively transmitted, the bit plane shifting process is selectively performed.

After the VLD is performed and the shifting is selectively performed on each bit plane, the obtained value is subjected to the IDCT in the block unit, thereby restoring the original image.

Thereafter, the image restored in the enhancement layer is added to an image decoded in the base layer, and then the obtained values are clipped in the range of $0 \sim 255$, whereby an image of an enhance picture quality is finally restored.

As mentioned above, if there is no DCT calculation in the enhancement layer of the MPEG-4 FGS encoding, the enhancement layer signal is determined by a quantization error.

However, because the quantization error is calculated from the difference between the signal prior to quantization and the value reconstructed by quantization, and thus, the sign (positive (+) or negative (-)) of the enhancement layer signal is determined irrespective of the base layer, information according to the sign should be encoded together.

The above references are incorporated by reference herein where appropriate for appropriate teachings of additional or alternative details, features and/or technical background.

## SUMMARY OF THE INVENTION

Therefore, an object of the present invention is to provide a fine granularity scalability encoding/decoding apparatus and method capable of improving a coding efficiency and reducing a bit rate of an entire coding stream by making an enhancement layer signal and a base layer signal have the same sign so as not to transmit sign information.

To achieve at least the above objects in whole or in parts, there is provided a fine granularity scalability encoding/decoding apparatus including: a first quantizer for performing a DCT on a motion-compensated image and quantizing a result value; a second quantizer for re-quantizing the value obtained by the first quantizer; an inverse-quantizer for re-quantizing a value re-quantized by the second quantizer; a first subtracter for obtaining a difference between a value of N times the re-quantized value and the inverse-quantized value; a second subtracter for obtaining a difference between the value quantized by the first quantizer and the value quantized by the inverse-quantizer; a third subtracter for subtracting an output value of the first subtracter from an output value of the second subtracter; a maximum value calculating unit for searching a maximum value from output values of the third subtracter; and a bit plane variable length coding unit for performing a variable length coding on the obtained maximum value by bit planes.

To achieve at least these advantages in whole or in parts, there is further provided a fine granularity scalability encoding/decoding method including: a first quantization step of quantizing a value obtained by performing a discrete cosine transforming on a motion-compensated image; a re-quantization step of re-quantizing the quantized value; an inverse-quantization step of inverse-quantizing the re-quantized value; a first subtraction step of obtaining a difference between a value of N times the re-quantized value and the inverse-quantized value; a second quantization step of obtaining a diffrence between the first-quantized value and the inverse-quantized value; and a third quantization of subtracting the output value obtained in the first subtraction step from the output value obtained in the second subtraction step.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

## BRIEF DESCRIPTION OF THE DRAWINGS

The invention will be described in detail with reference to the following drawings in which like reference numerals refer to like elements wherein:

Figure 1 is a schematic block diagram of an FGS encoder in accordance with a conventional art;
Figure 2 is a schematic block diagram of a decoder corresponding to the FGS encoder in accordance with the conventional art;
Figure 3 is a block diagram of an FGS encoder in accordance with one embodiment of the present invention;
Figure 4 is a block diagram of an FGS encoder in accordance with another embodiment of the present invention; and
Figure 5 is a schematic block diagram of a decoder corresponding to the FGS encoder in accordance with the preferred embodiment of the present invention.

## DETAILED DESCRIPTION OF THE PREFERRED EMBODIMENTS

In the present invention, when a coding is performed in an enhancement layer, input information of the enhancement layer is determined by a quantization error of a quantizer (that is, the input information is the quantization error), and the error is made by a difference between a signal prior to re-quantization and a decision level of the re-quantizer.

Comparatively, in the conventional method, the input information of the enhancement layer is not such a difference between the previous signal and the decision value as in the present invention but the difference between the previous signal and the reconstruction level. Therefore, in the present invention, in encoding the enhancement layer, coding information of the enhancement layer signal can be reduced.

A preferred embodiment of the present invention will now be described with reference to the accompanying drawings.

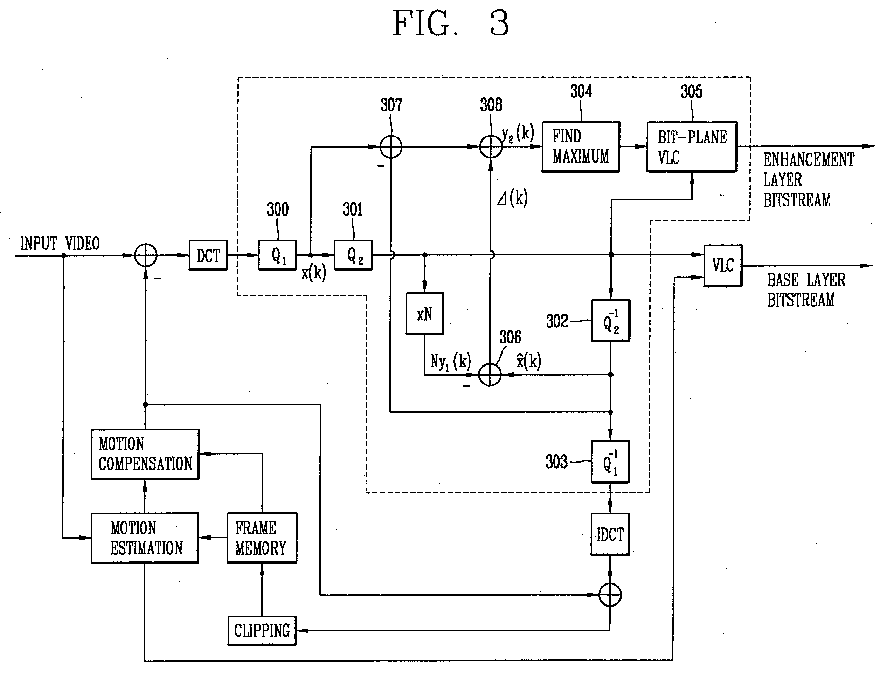

Figure 3 is a block diagram of an FGS encoder in accordance with one embodiment of the present invention.

As shown in Figure 3, a fine granularity scalability encoding/decoding apparatus includes: a first quantizer 300 for performing a DCT on a motion-compensated image and quantizing a result value; a second quantizer 301 for re-quantizing ($Q_2^{-1}$) the value (x(k)) obtained by the first quantizer; an inverse-quantizer 302 for re-quantizing a value ($y_1$(k)) re-quantized by the second quantizer 301; a first subtracter 306 for obtaining a difference between a value ($Ny_1$(k)) of N times the re-quantized value ($y_1$(k)) and the inverse-quantized value ($\hat{\chi}$(k)); a second subtracter 307 for obtaining a difference between the value (x(k)) quantized by the first quantizer 300 and the value quantized by the inverse-quantizer; a third subtracter 308 for subtracting the output value of the first subtracter from the output value obtained by the second subtracter; a maximum value calculating unit 304 for searching a maximum value from output values of the third subtracter; and a bit plane variable length coding unit 305 for performing a variable length coding on the obtained maximum value by bit planes.

The process that the error is calculated from each subtracter will now be described in detail.

Other process than the error calculating process is the same as in the conventional art, of which descriptions are thus omitted.

First, the first subtracter 306 obtains a difference between the value of N times ($Ny_1$(k)) the value (y1(k)) re-quantized by the second quantizer 301 and the value ($\hat{\chi}$(k)) inversely quantized by the inverse-quantizer 302. And then, the second subtracter 307 obtains a difference between the image reproduced after being coded in the base layer, that is, the image reproduced after passing the inverse-quantizer ($Q_2^{-1}$), and the original image having passed the first quantizer 300.

Thereafter, the third subtracter 308 obtains a difference value between the two output values calculated in the first and second subtracters 306 and 307.

The maximum value calculating unit 304 finds the number of maximum bit planes for transmitting a corresponding image frame from the image according to the difference value, and the bit plane variable length coding unit 305 performs a variable length coding on the calculated maximum value by bit planes.

A coding process of the base layer is the same as in the conventional art, so its description is omitted.

As afore-mentioned, in order not to code coding information in encoding the enhancement layer, the fine granularity scalability (FGS) encoder calculates a quantization error from a difference between the signal prior to re-quantization and the decision level of the re-quantizer, thereby making a sign of the enhancement layer signal and a sign of the base layer signal the same to enhance the coding efficiency.

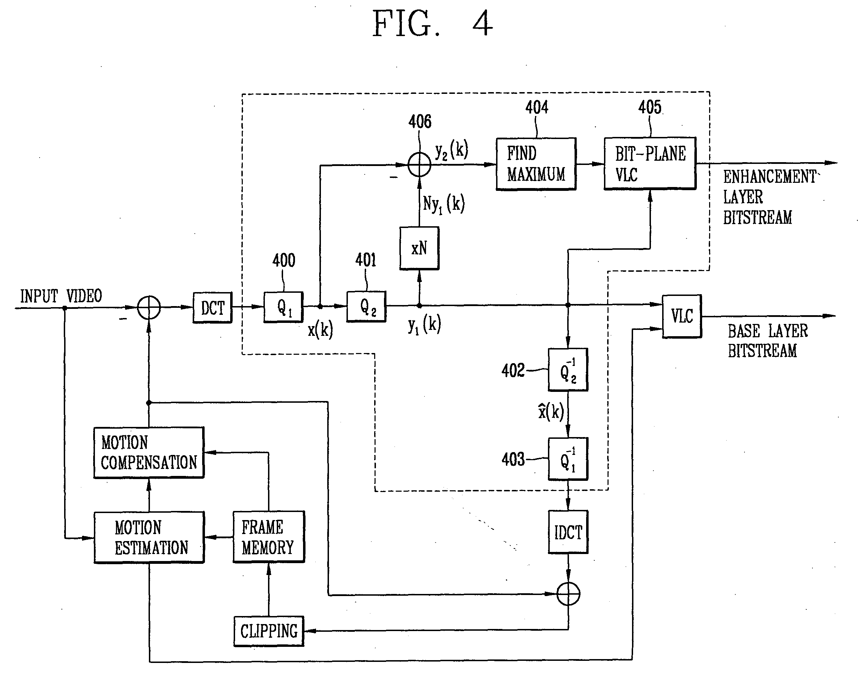

Figure 4 is a block diagram of an FGS encoder in accordance with another embodiment of the present invention.

The encoder includes: a first quantizer 400 ($Q_1$) for quantizing a DCT-calculated value; a second quantizer 401 ($Q_2$) for re-quantizing the value (x(k)) quantized by the first quantizer 400; an inverse-quantizer 402 ($Q_2^{-1}$) for inversely quantizing the value (y1(k)) re-quantized by the second quantizer 401; a re-inverse-quantizer 403 ($Q_1^{-1}$) for re-inversely quantizing the value ($\hat{\chi}$(k)) inversely quantized by the inverse-quantizer 402; a subtracter 406 for obtaining a difference between the value (x(k)) quantized by the first quantizer 400 and a value ($Ny_1$(k)) of N times the value ($y_1$(k)) quantized by the second quantizer 401; a maximum value calculating unit 404 for performing a maximum value from values outputted from the subtracter 406; and a bit plane variable length coding unit 405 for performing a variable length coding on the calculated maximum value by bit planes.

In Figures 3 and 4, two consecutive quantizers ($Q_1$ and $Q_2$) are defined, and the signal of the enhancement layer is determined by an error by the second quantizer ($Q_2$).

The quantization error is made by a difference between the signal prior to re-quantization and the decision level of the re-quantizer, not the difference between the signal prior to quantization and the re-constructed value after inverse-quantization.

Therefore, if the sign of the enhancement layer signal and the sign of the base layer signal are identical, the signals of the enhancement layers of Figures 3 and 4 would be verified to be the same by the mathematical equations (1) $\sim$ (6):

$$y_1(k) = \text{sgn}(x(k)) \left\lfloor \frac{x(k)}{N} \right\rfloor, \qquad \text{----------------------} \qquad (1)$$

$$\text{sgn}(x) = \begin{cases} 1, & x \geq 0 \\ -1, & x < 0 \end{cases}, \qquad \text{-------------------} \qquad (2)$$

$$|\hat{x}(k)| = \begin{cases} 0, & if \quad y_1(k) = 0, \\ \left\lfloor \frac{1}{2} N(2|y_1(k)|) + 1 \right\rfloor, & if \quad y_1(k) \neq 0, \; N \; is \; odd, \quad \text{-----} \quad (3) \\ \left\lfloor \frac{1}{2} N(2|y_1(k)| + 1) \right\rfloor - 1, & if \quad y_1(k) \neq 0, \; N \; is \; even, \end{cases}$$

$$\hat{x}(k) = \text{sgn}(y_1(k))|\hat{x}(k)|, \qquad (4)$$

$$y_2(k) = x(k) - \hat{x}(k) + \Delta(k), \; 0 \leq k \leq 63 \qquad (5)$$

$$\Delta(k) = \hat{x}(k) - Ny_1(k) \qquad (6)$$

Thereafter, the maximum value calculating unit 44 obtains the number of maximum bit planes for transmitting a corresponding image frame from the value outputted from the subtracter, and the bit plane variable length coding unit 45 performs the variable length coding process on the calculated maximum value by bit planes.

A coding process of the base layer is the same as that of the conventional art, so its description is omitted.

Accordingly, the encoder in accordance with another embodiment of the present invention has the same function as that of the encoder of Figure 3 in the aspect of improving the coding efficiency by making the sign of the enhancement layer signal and the sign of the base layer signal the same.

However, unlike the encoder of Figure 3, the encoder of Figure 4 has a simpler structure by reducing the number of subtracters, according to which a complexity in implementation is reduced. In addition, because the number of memory units of a circuit or components is reduced, calculation time in each unit can be reduced.

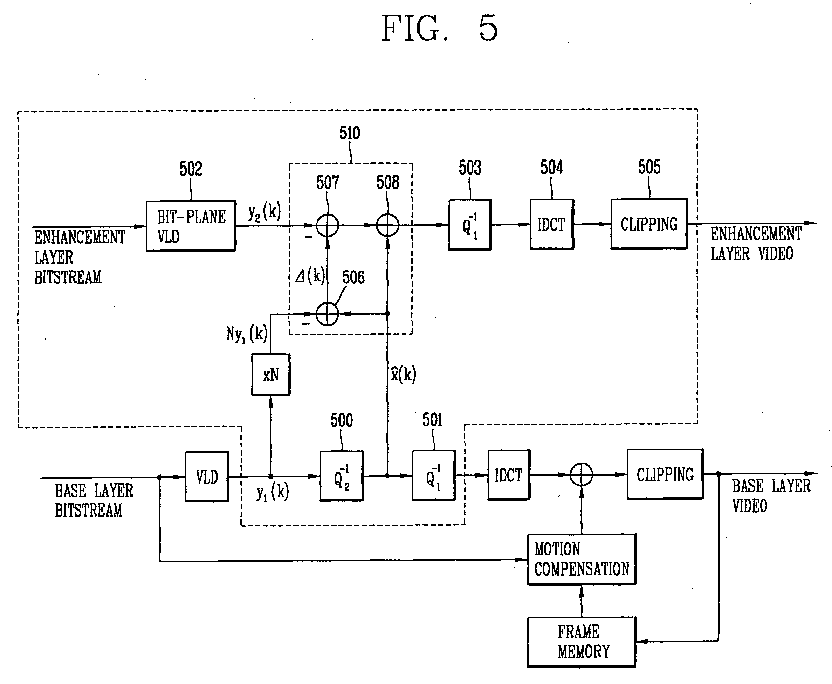

Figure 5 is a schematic block diagram of a decoder corresponding to the FGS encoder in accordance with the preferred embodiment of the present invention.

The decoder of Figure 5 performs a decoding on a bit stream received from the enhancement layer in an inverse order to that of the encoders of Figures 3 and 4.

As illustrated, the decoder includes: a bit plane variable length decoding (VLD) unit 502 for variable-length decoding an inputted enhancement layer bit stream by bit planes; an adding/subtracting unit 510 for adding/subtracting a difference value between the variable length decoded value of each bit plane and an image reproduced in the base layer; an inverse-quantizer 503 ($Q_1^{-1}$) for inversely quantizing the added/subtracted value; an inverse discrete cosine transforming unit 504 for restoring an image transmitted from the enhancement layer by performing an inverse discrete cosine transforming (IDCT) on the inversely quantized value by block units (8x8 unit); and a clipping unit 505 for restoring an enhanced image by clipping the inverse discrete cosine transformed image values in the range of $0 \sim 255$.

The adding/subtracting unit 510 includes: a fifth subtracter 506 for obtaining a difference value ($\Delta$k) between the value ($Ny_1(k)$) of N times the value ($y_1(k)$) obtained by variable length decoding the bit stream of the base layer and the value ($\chi(k)$) obtained by the inverse-quantizer 500 which inversely quantizes the variable length decoded value ($y_1(k)$); a sixth subtracter 507 for obtaining a difference value between the value ($\Delta(k)$) obtained by the fifth subtracter 506 and the bit plane variable length decoded value ($y_2(k)$); and a seventh subtracter 508 for obtaining a difference value between the value obtained by the sixth subtracter 507 and the value ($\hat{\chi}(k)$) inversely quantized by the inverse-quantizer 500.

In the above embodiment, the operation is explained by the construction of units, but the same process can be also performed by the method. And the construction and operation of the decoder of the base layer is the same as in the conventional art, so its descriptions are omitted.

Basically, as shown in Figure 2, in the MPEG-4 FGS decoder, the signal of the enhancement layer and the signal of the base layer are added in a space region, not in the discrete cosine transform region, so that there can be an inconsistency between the encoder and the decoder due to the clipping. In order to solve this problem, in the decoder of the present invention, the signal of the enhancement layer and the signal of the base layer are added in the DCT region.

In the encoder of the present invention, the sign of the enhancement signal is the same as that of the base layer except when the signal value of the base layer is 0, so the sign information of signal of the enhancement layer is not transmitted. In this respect, however, because there is no sign information to be referred when the value of the signal of the base layer is 0, sign information of 1 bit is insertedly added to a corresponding codeword of the signal of the enhancement layer.

The decoder decodes the signal of the base layer and then the signal of the enhancement layer. At this time, the sign information of the enhancement layer signal is decoded to be the same as the sign of the base layer signal. When a value of the base layer signal is 0, an accurate sign is obtained from the 1 bit sign information after the corresponding codeword of the enhancement layer signal and then decoded.

When the signal of the enhancement layer is generated in the encoder, the quantization error is made by the difference of the decision level, not the reconstruction value, so that a value of difference between the reconstruction value and the decision level (value) is corrected before the signal of the base layer and the signal of the enhancement layer are added in the decoder.

As so far described, the fine granularity scalability encoding/decoding apparatus and method of the present invention have the following advantages.

That is, for example, because the sign of the enhancement layer and the sign of the base layer are generated to be the same, sign information is not needed to be transmitted. Thus, a coding efficiency can be improved and a bit rate of the overall coding stream can be reduced.

In addition, in the FGS encoding method for a moving picture streaming in a wired/wireless network, more efficient performance is obtained than in the conventional MPEG-4 FGS encoding method. Moreover, by using the coding method with a hierarchy structure, an efficiency in an error-resistance transmission of moving picture information can be heightened.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

**Claims**

1. A fine granularity scalability encoding apparatus comprising:

   a first quantizer for performing a DCT on a motion-compensated image and quantizing a result value;
   a second quantizer for re-quantizing the value obtained by the first quantizer;
   an inverse-quantizer for re-quantizing a value re-quantized by the second quantizer;
   a first subtracter for obtaining a difference between a value of N times the re-quantized value and the inverse-quantized value;
   a second subtracter for obtaining a difference between the value quantized by the first quantizer and the value quantized by the inverse-quantizer; and
   a third subtracter for subtracting the output value of the first subtracter from the output value of the second subtracter.

2. The apparatus of claim 1 further comprising:

   a bit plane shifting unit for performing a bit plane shifting if a block with a good picture quality is required.

3. The apparatus of claim 1 further comprising:

a maximum value calculating unit for searching a maximum value from output values of the third subtracter; and a bit plane variable length coding unit for performing a variable length coding on the obtained maximum value by bit planes.

**4.** A fine granularity scalability encoding apparatus in which a quantization error is calculated from a difference between a signal prior to quantization and a decision level of a quantizer so as not to code sign information in encoding an enhancement layer.

**5.** A fine granularity scalability encoding apparatus comprising:

a first quantizer for performing a DCT on a motion-compensated image and quantizing a result value;
a second quantizer for re-quantizing the value obtained by the first quantizer;
an inverse-quantizer for re-quantizing a value re-quantized by the second quantizer;
re-inverse-quantizer for re-inversely quantizing the value inversely quantized by the inverse-quantizer; and
a subtracter for obtaining a difference between the value quantized by the first quantizer and the value of N times the value quantized by the second quantizer.

**6.** The apparatus of claim 5 further comprising:

a bit plane shifting unit for performing a bit plane shift if a block with a good picture quality is necessary.

**7.** The apparatus of claim 5 further comprising:

a maximum value calculating unit for searching a maximum value from output values of the third subtracter; and
a bit plane variable length coding unit for performing a variable length coding on the obtained maximum value by bit planes.

**8.** A fine granularity scalability decoding apparatus comprising:

a bit plane variable length decoding (VLD) unit for variable-length decoding an inputted enhancement layer bit stream by bit planes;
an adding/subtracting unit for adding/subtracting a difference value between the variable length decoded value of each bit plane and an image reproduced in the base layer;
an inverse-quantizer for inversely quantizing the added/subtracted value;
an inverse discrete cosine transforming unit for restoring an image transmitted from the enhancement layer by performing an inverse discrete cosine transforming (IDCT) on the inversely quantized value by block units; and
a clipping unit for restoring an enhanced image by clipping the inverse discrete cosine transformed image values in the range of $0 \sim 255$.

**9.** The apparatus of claim 8, wherein the adding/subtracting unit comprising:

a fifth subtracter for obtaining a difference value ($\Delta k$) between the value of N times the value obtained by variable length decoding the bit stream of the base layer and the value obtained by inversely quantizing the variable length decoded value;
a sixth subtracter for obtaining a difference value between the value obtained by the fifth subtracter and the bit plane variable length decoded value; and
a seventh subtracter for obtaining a difference value between the value obtained by the sixth subtracter and the value inversely quantized by the inverse-quantizer.

**10.** A fine granularity scalability encoding method comprising:

a first quantization step of quantizing a value obtained by performing a discrete cosine transforming on a motion-compensated image;
a re-quantization step of re-quantizing the quantized value;
an inverse-quantization step of inverse-quantizing the re-quantized value;
a first subtraction step of obtaining a difference between a value of N times the re-quantized value and the inverse-quantized value;

a second quantization step of obtaining a difference between the first-quantized value and the inverse-quantized value; and
a third quantization of subtracting the output value obtained in the second subtraction step from the output value obtained in the first subtraction step.

11. The method of claim 10 further comprising:

a step of finding a maximum value from the output values obtained in the third subtraction step; and
a step of performing a variable length coding on the calculated maximum value by bit planes.

12. A fine granularity scalability encoding method comprising:

first quantizing a value obtained by performing a discrete cosine transforming on a motion-compensated image;
re-quantizing the quantized value;
inversely quantizing the re-quantized value;
inversely quantizing the inversely quantized value;
obtaining a difference between the first-quantized value and a value of N times the requantized value.

13. The method of claim 12 further comprising:

finding a maximum value from the output values obtained in the third subtraction step; and
performing a variable length coding on the calculated maximum value by bit planes.

14. A fine granularity scalability decoding method comprising:

variable-length decoding an inputted enhancement layer bit stream by bit planes;
adding/subtracting a difference value between the variable length decoded value of each bit plane and an image reproduced in the base layer;
inversely quantizing the added/subtracted value;
restoring an image transmitted from the enhancement layer by performing an inverse discrete cosine transforming (IDCT) on the inversely quantized value by block units; and
restoring an enhanced image by clipping the inverse discrete cosine transformed image values in the range of 0 ~ 255.

15. The method of claim 14, wherein the step of adding/subtracting comprises:

a first step of obtaining a difference value between the value of N times the value obtained by variable length decoding the bit stream of the base layer and the value obtained by inversely quantizing the variable length decoded value;
a second step of obtaining a difference value between the value obtained by the first step and the bit plane variable length decoded value; and
a third step of obtaining a difference value between the value obtained in the second step and the inversely quantized value.

# FIG. 1

FIG. 2

ENHANCEMENT LAYER DECODING

EP 1 401 208 A1

# FIG. 3

EP 1 401 208 A1

# FIG. 4

# FIG. 5

ENHANCEMENT
LAYER
BITSTREAM

502 BIT-PLANE VLD → $y_2(k)$

510

507 508

503 $Q_1^{-1}$

504 IDCT

505 CLIPPING → ENHANCEMENT LAYER VIDEO

$\Delta(k)$  506

$Ny_1(k)$

xN

$\hat{x}(k)$

BASE LAYER
BITSTREAM

VLD → $y_1(k)$

500 $Q_2^{-1}$

501 $Q_1^{-1}$

IDCT

CLIPPING → BASE LAYER VIDEO

MOTION COMPENSATION

FRAME MEMORY

EP 1 401 208 A1

**European Patent Office**

**EUROPEAN SEARCH REPORT**

Application Number

EP 03 01 9669

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LI W: "OVERVIEW OF FINE GRANULARITY SCALABILITY IN MPEG-4 VIDEO STANDARD" IEEE TRANSACTIONS ON CIRCUITS AND SYSTEMS FOR VIDEO TECHNOLOGY, IEEE INC. NEW YORK, US, vol. 11, no. 3, March 2001 (2001-03), pages 301-317, XP000994715 ISSN: 1051-8215 | 4 | H04N7/26 |
| Y | * page 303, right-hand column, line 7 - page 304, left-hand column, last line * * page 305, right-hand column, line 28 - line 49 * * page 308, right-hand column, line 4 - page 310, left-hand column, paragraph 1; figures 7,8,12-15,17 * * page 313, right-hand column, last paragraph - page 314, left-hand column, paragraph 1 * | 1-3,5-15 | |
| Y | ROH K-C ET AL: "Data partitioning and coding of DCT coefficients based on requantization for error-resilient transmission of video" SIGNAL PROCESSING. IMAGE COMMUNICATION, ELSEVIER SCIENCE PUBLISHERS, AMSTERDAM, NL, vol. 17, no. 8, 28 August 2002 (2002-08-28), pages 573-585, XP004378875 ISSN: 0923-5965 | 1-3,5-15 | |
| A | * abstract * * page 576, right-hand column, line 11 - page 578, left-hand column, last paragraph; figures 4-6 * * page 580, right-hand column, line 1 - page 581, left-hand column, line 2; figure 9 * | 4 | TECHNICAL FIELDS SEARCHED (Int.Cl.7) <br> H04N |

-/--

The present search report has been drawn up for all claims

| Place of search | Date of completion of the search | Examiner |
|---|---|---|
| BERLIN | 15 December 2003 | Heising, G |

EPO FORM 1503 03.82 (P04C01)

EP 1 401 208 A1

| | European Patent Office | EUROPEAN SEARCH REPORT | Application Number EP 03 01 9669 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MENDES L R ET AL: "Two-scale transmission of DCT-coded video over lossy packet networks" TELECOMMUNICATIONS SYMPOSIUM, 1998. ITS '98 PROCEEDINGS. SBT/IEEE INTERNATIONAL SAO PAULO, BRAZIL 9-13 AUG. 1998, NEW YORK, NY, USA,IEEE, US, 9 August 1998 (1998-08-09), pages 510-515, XP010300835 ISBN: 0-7803-5030-8 * page 511, right-hand column; figures 1,2 * | 1-15 | |
| A | HSU Y-F ET AL: "Embedded SNR scalable MPEG-2 video encoder and its associated error resilience decoding procedures" SIGNAL PROCESSING. IMAGE COMMUNICATION, ELSEVIER SCIENCE PUBLISHERS, AMSTERDAM, NL, vol. 14, no. 5, March 1999 (1999-03), pages 397-412, XP004163262 ISSN: 0923-5965 * the whole document * | 1-15 | TECHNICAL FIELDS SEARCHED (Int.Cl.7) |

The present search report has been drawn up for all claims

| Place of search BERLIN | Date of completion of the search 15 December 2003 | Examiner Heising, G |